Europäisches Patentamt

European Patent Office

Office européen des brevets

(11) Numéro de publication: **0 278 810**
**A1**

## (12) DEMANDE DE BREVET EUROPEEN

(21) Numéro de dépôt: 88400101.7

(22) Date de dépôt: 19.01.88

(51) Int. Cl.⁴: **F 16 K 17/02**
F 16 K 17/04

(30) Priorité: 21.01.87 FR 8700686

(43) Date de publication de la demande:
17.08.88 Bulletin 88/33

(84) Etats contractants désignés: DE FR GB IT

(71) Demandeur: Nicolas, Yves Jean-Marie
16 Square du Pont Colbert
F-78000 Versailles (FR)

Noguier, Jean-Paul
Chemin des Oliviers
F-30700 Uzes (FR)

(72) Inventeur: Nicolas, Yves Jean-Marie
16 Square du Pont Colbert
F-78000 Versailles (FR)

(54) **Soupape de sécurité.**

(57) Dans un corps cylindrique (10) sont aménagées une chambre centrale (16) munie d'un trou de décharge (24) et deux chambres opposées (18-20). Les extrémités d'un piston flottant (26) sont engagées dans ces chambres opposées et soumises à la pression à contrôler et à une pression de référence. Un tiroir cylindrique (34) solidaire du piston (26) coulisse dans la chambre centrale (16). En position fermée, le tiroir (34) obture d'une manière étanche le trou de décharge (24) et le piston (26) obture d'une manière non étanche la chambre de contrôle (18). En position ouverte, un trou radial (48) pratiqué dans le tiroir (34) fait face ou trou de décharge (24). Une décompression de la chambre centrale (16) est obtenue au début de l'ouverture de la soupape (canaux étroits 52) et un freinage du tiroir (34) est obtenu à la fin de cette ouverture (trou 44 et téton 54).

Applications : Soupape de sécurité pour l'industrie pétrolière, Vanne de réglage sans réaction à l'ouverture, Duse de contrôle de pression.

FIG. IA

EP 0 278 810 A1

**Description**

SOUPAPE DE SECURITE

L'invention concerne une soupape de sécurité notamment pour les canalisations véhiculant des fluides abrasifs à haute pression, tels que les boues utilisées pour le forage des puits de pétrole ou de gaz.

D'une manière générale, une soupape de sécurité comporte, d'une part, un corps creux fermé par un bouchon délimitant un volume de révolution formé d'une chambre centrale relativement large et de deux chambres opposées relativement étroites et, d'autre part, un piston flottant ayant ses extrémités engagées dans lesdites chambres opposées, une face de ce piston étant soumise à une poussée de référence et l'autre à la pression du fluide à contrôler, la chambre centrale étant en communication avec l'extérieur par un trou de décharge.

Une telle soupape de sécurité est décrite dans le brevet allemand N° 1.083.096 (Eddelbutteb 1960) et le brevet français N° 1.384.817 (SITA-1963).

De telles soupapes conviennent pour des canalisations véhiculant des fluides non abrasifs soumis à des pressions moyennes.

Dans le cas de fluides abrasifs à très haute pression (boue ou ciment à 700 bars de l'industrie pétrolière par exemple), au moment où la pression à contrôler subit une brusque augmentation et engendre sur l'extrémité de contrôle du piston une force supérieure à la poussée de référence appliquée sur l'autre extrémité, le fluide sous contrôle s'échappe à grande vitesse tout autour de l'extrémité de contrôle du piston et sa pression chute immédiatement par laminage.

Du fait des particules solides transportées à grande vitesse par le fluide, les bords de la chambre de contrôle et ceux de l'extrémité concernée du piston sont rapidement érodés de sorte que, après un petit nombre d'opérations de décharge, une perte d'étanchéité se produit à ce niveau qui rend la soupape inutilisable en l'état et nécessite une réparation.

L'objet principal de l'invention est de remédier à ce défaut majeur des soupapes de sécurité actuellement disponibles.

Un second objet de l'invention concerne des moyens complémentaires permettant d'augmenter la rapidité d'ouverture de la soupape tout en lui interdisant de vibrer à cette occasion.

Selon l'invention, une soupape de sécurité du genre décrit ci-dessus est caractérisée en ce que les chambres opposées ayant des diamètres identiques et le trou de décharge étant muni de joints d'étanchéité, le piston comporte dans sa partie médiane un tiroir cylindrique formé d'un fond et d'une paroi, adapté à coulisser dans la chambre centrale, au moins un trou longitudinal étant percé dans ce fond et au moins un trou radial percé dans cette paroi, et en ce que, en position fermée, la paroi du tiroir obture d'une manière étanche le trou de décharge et le piston obture d'une manière non étanche la chambre sous contrôle et, en position ouverte, le piston est dégagé de la chambre sous contrôle et le trou radial est disposé en face du trou de décharge.

Selon une caractéristique complémentaire de l'invention, la paroi du tiroir comporte des canaux étroits raccordés au trou radial, les dits canaux étant adaptés à glisser sans dommage sur un joint d'étanchéité associé au trou de décharge, pendant la première partie du mouvement d'ouverture du tiroir.

Grâce à ces dispositions, les deux fonctions de base d'une soupape de sécurité qui jusqu'à présent était remplies par les mêmes organes, sont séparées l'une de l'autre et assumées par deux organes différents, chacun étant spécialement adapté à sa fonction particulière.

En effet, la première de ces fonctions, à savoir : établir en position fermée une étanchéité entre la chambre sous contrôle et le trou de décharge, est assurée par la paroi du tiroir coopérant avec les joints d'étanchéité associés à ce trou; cependant que la seconde fonction, à savoir : produire une chute de pression par laminage entre cette chambre et ce trou lorsque la soupape commence à s'ouvrir, continue à être assurée par l'extrémité du piston engagée d'une manière non étanche dans la chambre soumise à la pression du fluide à contrôler.

L'adaptation particulière du tiroir à la répétition de la première fonction de la soupape résulte de la présence des canaux étroits (des fentes longitudinales par exemple) raccordés au trou radial qui, à la fois, assurent une décompression rapide de la chambre centrale dès que le tiroir commence son mouvement d'ouverture et, en outre, glissent sans arrachement sur un joint qui vient d'être dégagé de sa fonction d'étanchéité. Ce qui a pour effet de ramener au niveau des bords de la chambre sous contrôle et de l'extrémité concernée du piston, la totalité de la perte de pression par laminage entre cette chambre et le trou de décharge. Dans ces conditions, comme l'extrémité du piston engagée dans la chambre à contrôler n'a pas à établir une étanchéité, on pourra, au moyen d'une chemise en métal dur disposée à l'entrée de la chambre et d'un embout en métal dur placé sur l'extrémité du piston, obtenir pour ces organes une résistance efficace à l'abrasion. Ce qui, jusqu'à présent, ne pouvait être obtenu puisque ces mêmes organes devaient en outre établir l'étanchéité, objet de la première fonction de la soupape.

Selon une seconde caractéristique complémentaire de l'invention, un téton monté fixe dans le soupape est adapté à obturer progressivement le trou longitudinal percé dans la paroi du tiroir lorsque le tiroir termine son mouvement d'ouverture.

Grâce à cette disposition, le mouvement d'ouverture du tiroir commence à vitesse rapidement croissante et se termine à vitesse progressivement décroissante, ce qui a pour effet de supprimer le rebondissement du piston en fin d'ouverture du tiroir tout en lui permettant un début d'ouverture rapide.

Les caractéristiques et avantages de l'invention apparaîtront d'une manière plus précise à la suite de la description ci-après d'une forme de réalisation donnée à titre d'exemple non limitatif, en référence aux dessins annexés dans lesquels :

    - les figures 1A et 1B représentent une forme de réalisation de la soupape de sécurité selon l'invention, en position fermée et ouverte.

    - la figure 2 est une coupe transversale selon la ligne II de la soupape selon la figure 1.

    - la figure 3 est une seconde forme de réalisation de la soupape selon l'invention représentée en position fermée.

    - la figure 4 représente une vanne selon l'invention destinée à ajuster le débit d'un fluide à haute pression.

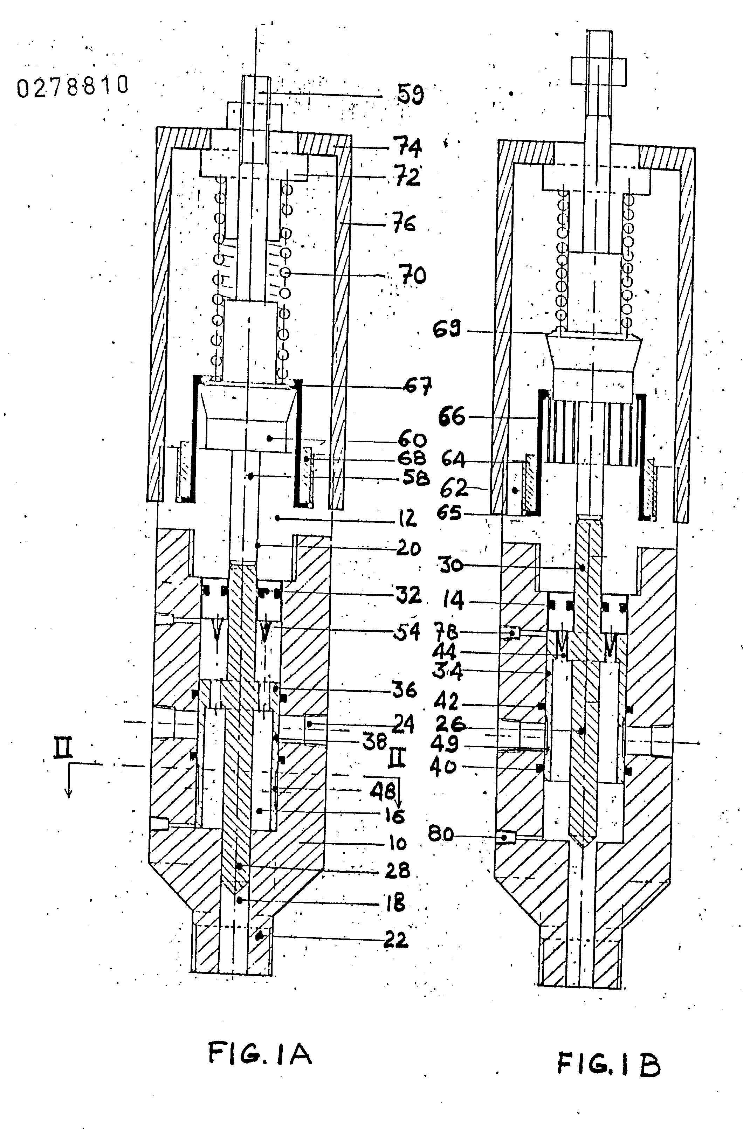

Selon les figures 1A et 1B, la soupape selon l'invention comprend un corps cylindrique creux 10 fermé par un bouchon vissé 12 équipé d'un joint torique d'étanchéité 14. Le corps 10 enveloppe un volume de révolution constitué par une chambre centrale relativement large 16 et par une chambre sous contrôle relativement étroite 18 à laquelle est opposée une chambre de référence 20, de même diamètre, aménagée dans le bouchon 12. Le corps 10 comporte en outre un raccord fileté 22, traversé par la chambre sous contrôle 18, adapté à être fixé sur la canalisation du fluide sous pression à contrôler.

A mi-hauteur de la chambre centrale 16 sont percés dans la paroi du corps 10, deux trous de décharge 24 diamétralement opposés, les bords internes de ces trous étant chanfreinés et leurs bords externes usinés en filetages tronconiques.

Le corps 10 et le bouchon 12 enferment un piston flottant 26 dont les extrémités cylindriques 28 et 30 sont adaptées à être respectivement engagées dans la chambre de contrôle 18 avec un jeu très faible mais non nul et dans la chambre de référence 20, d'une manière étanche grâce à la présence d'un joint torique d'étanchéité 32.

Le piston 26 comporte dans sa partie médiane un tiroir cylindrique 34 constitué par un fond 36 et une paroi 38, adapté à coulisser dans la chambre centrale 16. Lorsque la soupape est en position fermée (Fig. 1A) le bord de la paroi 38 du tiroir 34 est très proche du fond de la chambre centrale 16 jouxtant la chambre sous contrôle 18 et l'extrémité 28 du piston 26 est engagée dans la chambre 18. Lorsque la soupape est en position ouverte (Fig.1B) le fond 36 du tiroir 34 est en appui sur le fond de la chambre centrale 16 jouxtant la chambre de référence 20 et l'extrémité 28 du piston 26 est entièrement désengagée de la chambre sous contrôle 18. Dans la position fermée de la soupape, l'extrémité 30 du piston 26 est engagée un peu au-delà du joint d'étanchéité 32 et dans la position ouverte, engagée plus profondément.

La paroi 38 du tiroir 34 coopère avec deux joints d'étanchéité 40 et 42, logés dans deux rainures pratiquées dans la paroi de la chambre centrale 16, pour que, en position fermée, la chambre centrale 16 et les trous de décharge 24 soient totalement isolés l'un de l'autre.

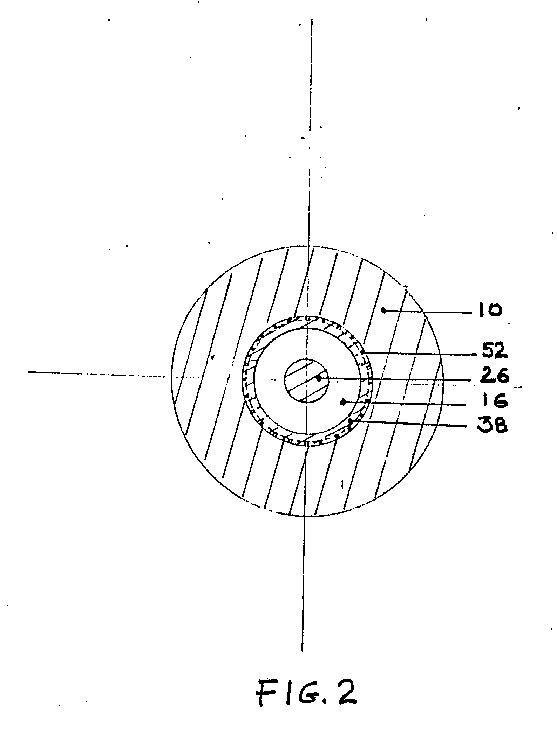

Dans le fond 36 du tiroir 34 sont percés deux trous longitudinaux 44 diamétralement opposés et, au voisinage du bord de la paroi 38 du tiroir 34 sont percés deux trous radiaux 48 se faisant face, débouchant dans un chanfrein 49. En outre, comme cela apparaît sur la figure 2, une couronne 52 de fentes longitudinales étroites (3 à 4 dixièmes de millimètres de large) raccordées au chanfrein 49, est aménagée dans la paroi 38 du tiroir 34 et leur longueur est déterminée de façon que, en position fermée, cette couronne de fentes 52 n'atteigne pas le bord de la rainure dans laquelle est logé le joint d'étanchéité 40.

Dans le fond de la chambre centrale 16 jouxtant la chambre de référence 20, deux tétons coniques tels 54 sont fixés, ces tétons étant adaptés à obturer progressivement les trous longitudinaux 44 du fond 36 du tiroir 34, dès que les trous radiaux 48 sont bien engagés en face des trous de décharge 24.

Dans la chambre de référence 20 est également engagée l'extrémité d'un piston de référence 58, venant en appui sur l'extrémité 30 du piston 26. Le piston de référence 58 comporte un épaulement 60 adapté à prendre appui sur la face extérieure du bouchon 12, lorsque la soupape est en position fermée. Le bouchon 12 comporte une gorge annulaire dont la paroi externe 62 est filetée à l'intérieur et à l'extérieur. Dans cette gorge annulaire est disposé un manchon en métal élastique comportant d'une part une embase 64 munie d'une collerette d'appui 65 et d'autre part, une pluralité de lames élastiques 66 séparées les unes des autres par une fente longitudinale, chaque lame étant terminée par un crochet de verrouillage 67. Ce manchon est maintenu fixe dans sa gorge au moyen d'un écrou annulaire 68 vissé dans la paroi externe 62 de cette gorge, la hauteur de l'écrou 68 déterminant la raideur des lames élastiques 66 du manchon. Les crochets de ces lames 66 sont en appui sur une rampe de décrochage 69 aménagée sur l'épaulement 60 du piston 58.

Un ressort hélicoïdal 70 est monté comprimé entre l'épaulement 60 du piston 58 et une plaque d'appui circulaire 72. Cette plaque 72 est percée d'un trou central traversé par la seconde extrémité du piston 58 et elle est maintenue par le rebord interne 74 d'un cylindre de protection 76 vissé bloqué sur l'extérieur du bouchon 12.

Au voisinage du fond de la chambre centrale 16, la paroi du corps 10 de la soupape comporte deux trous 78 et 80 munis de bouchons amovibles. Ces trous permettent de vidanger et de remplir d'huile propre la chambre centrale 16 après chaque ouverture de la soupape.

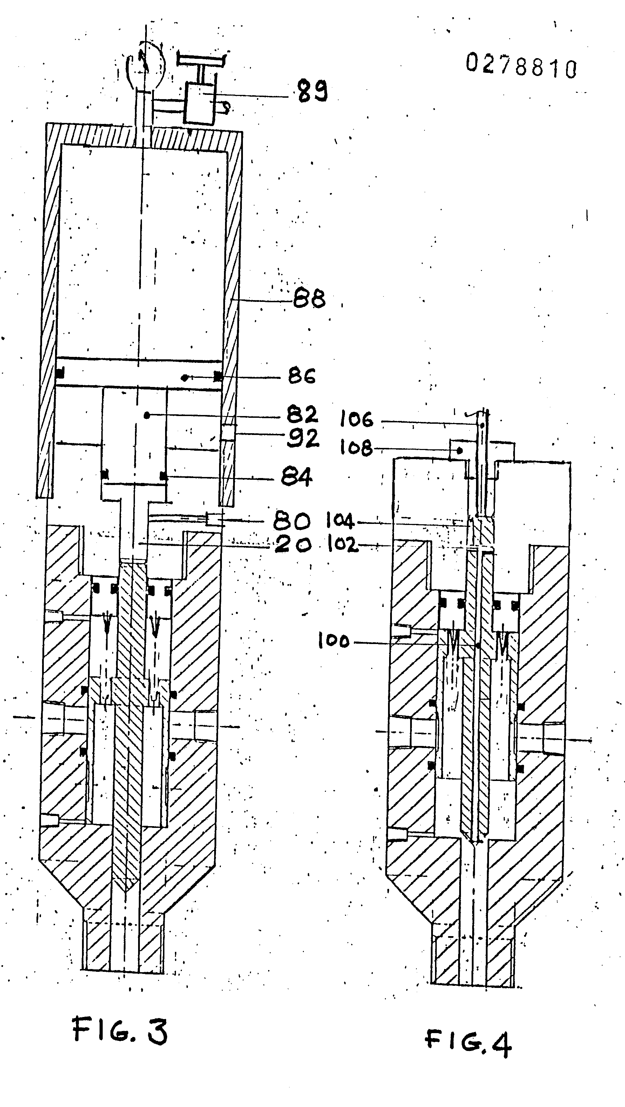

Selon la figure 3, l'extrémité 30 du piston de contrôle 26 est engagée dans une chambre de référence 20 remplie d'huile, un orifice de remplissage 80 étant prévu à cet effet. Dans la chambre de référence 20 glisse un piston 82 équipé d'un joint d'étanchéité 84. La tête 86 du piston 82 a une section plusieurs fois supérieure (par exemple 5 fois) à celle de la base de ce piston engagé dans la chambre de référence 20. La tête 86 du piston 82 coulisse d'une manière étanche dans une chambre auxiliaire 88 remplie d'un gaz sous pression, cette pression étant réglable au moyen du robinet de contrôle 89. L'espace 90 compris entre la tête du piston 82 et le bord extérieur du bouchon 12 est percé d'un orifice 92 percé dans la paroi de la chambre 88.

Selon la figure 4, le piston flottant 26 est muni d'un passage axial 100 débouchant, à son extrémité 30, dans un passage transversal 102 relié à une rainure longitudinale 104. A l'extrêmité 30 du piston 26 est fixée une tige de commande 106 pénétrant dans la chambre de référence 20 à travers un bouchon 108 fermant cette chambre 20.

La soupape selon l'invention étant raccordée à une canalisation dans laquelle circule un fluide abrasif à très haute pression, cette haute pression est constamment appliquée à la chambre sous contrôle 18. Lorsque cette haute pression engendre sur la face de l'extrémité 28 du piston de contrôle 26, une poussée inférieure à la poussée de référence à laquelle est soumise l'autre extrémité 30 de ce piston, la soupape est fermée. Dans ce cas, la chambre centrale 16 préablement remplie d'huile propre est soumise à la pression du fluide à contrôler puisqu'aucune étanchéité n'est assurée autour de l'extrémité 28 du piston de contrôle 26 engagée dans la chambre sous contrôle 18. La parois 38 du tiroir 34 est en appui sur la paroi de la chambre centrale 16 et les joints d'étanchéité 40 et 42 disposés de part et d'autre des trous de décharge 24 coopèrent avec le tiroir 34 pour isoler totalement la chambre 16 et les trous 24. Dans cette position fermée de la soupape, l'épaulement 60 du piston de référence 58 est en butée sur la face extérieure du bouchon 12, la poussée de référence à laquelle est alors soumis le piston de contrôle 26 est la force susceptible d'amener l'épaulement 60 à quitter sa butée.

Dans le cas présent, cette force de décollement est déterminée d'une part, par la force de maintien en position verrouillée des crochets 67 des lames élastiques 66 sur la rampe de décrochage 69 de l'épaulement 60 et, d'autre part, par la force de compression du ressort hélicoïdal 70.

A titre d'exemple, on supposera que la pression de tarage de la soupape étant de 500 bars, une force de maintien correspondant à une pression de 300 bars appliquée sur l'extrémité 30 du piston de contrôle 26 est engendrée par les crochets tarés 67, la pression de tarage restante (200 bars) correspondant à la force de compression initiale du ressort 70.

Au moment où une surpression supérieure (de 100 bars par exemple) à la pression de tarage de la soupape se produit brusquement dans la canalisation de fluide à contrôler, une force supérieure à la poussée de référence est appliquée à l'extrémité 28 du piston de contrôle 36 engagée dans la chambre sous contrôle 18. Un peu de fluide abrasif en surpression pénètre alors dans la chambre centrale 16 en s'échappant tout autour de l'extrémité 28 du piston 26. Le piston 26 subit alors une accélération proportionnelle à la différence des forces appliquées à ses deux extrémités, cependant qu'un mouvement relativement lent et un petit déplacement du piston 26 s'ensuivent. Pendant ce court intervalle de temps, la circulation de fluide abrasif autour de l'extrémité 28 du piston 26 et le long du bord de la chambre sous contrôle 18, n'entraîne pas d'érosion dommageable du fait que cette circulation s'établit dans un jeu très faible (quelques centièmes de millimètre par exemple), ce qui n'entraîne qu'un faible débit.

Très rapidement, ce petit déplacement est suffisant pour amener la couronne de fentes longitudinales 52, pratiquées dans la paroi 38 du tiroir 34 du piston 26, à s'engager progressivement au-dessus du joint d'étanchéité 40. Comme la section de passage totale de ces fentes est, par construction, très supérieure (au moins une dizaine de fois) à la section de passage existant entre l'extrémité 28 du piston 26 et la paroi de la chambre sous contrôle 18, l'avancée de ces fentes au-dessus du joint 40 a pour effet de brusquement décompresser l'huile contenue dans la chambre centrale 16, la chute de pression étant alors immédiatement reportée autour de l'extrémité 28 du piston 26. Avant et pendant cette décompression, la couronne de fentes longitudinales glisse sans arrachement sur le joint 40, aucune déformation sensible du joint ne pouvant en effet se produire le long de ces fentes particulièrement étroites (3 à 4 dixièmes de millimètre) qui progressivement passent par-dessus un joint qui n'a plus à remplir sa fonction d'étanchéité. Très rapidement, éga lement, ce petit déplacement a pour effet de faire glisser les crochets 67 des lames 66 sur la rampe de décrochage 69 et de brusquement faire diminuer de 300 bars la pression de tarage de la soupape. Le piston de contrôle 26 subit alors une accélération brusque qui l'amène à prendre rapidement de la vitesse jusqu'à ce que le trou radial 48, pratiqué dans la paroi du tiroir 34, commence à se mettre en face du trou de décharge 24. Au cours de ce déplacement rapide, l'huile propre contenue dans la chambre centrale 16 du côté de la chambre de référence 20 s'écoule sans difficulté particulière (les extrémités 28 et 30 du piston 26 ont même diamètre) à travers les trous longitudinaux 44 pratiqués à travers le fond du tiroir 34. Il en résulte que le trou radial 48 peut en quelques millisecondes arriver à être presqu'entièrement placé en face du trou de décharge 24. La surpression que connaissait à l'instant précédent la chambre sous contrôle 18 disparaît au fur et à mesure que l'huile initialement contenue dans la chambre centrale 16 et, le cas échéant, une certaine quantité de fluide abrasif, s'écoulent au travers du trou de décharge 24.

Le mouvement du tiroir 34 n'en continue pas moins pour autant cependant que les tétons coniques 54 s'engagent dans les trous 44 du fond du tiroir. Dès cet instant, le mouvement du tiroir 34 est fortement freiné par le laminage de l'huile dans ces trous 44 progressivement obturés et nul rebond ou vibration du piston 26 ne peut prendre naissance. Lorsque le mouvement du tiroir 34 s'est ainsi progréssivement arrêté et que la pression du fluide dans la canalisation à contrôler est descendue en-dessous d'une pression de tarage correspondant à la force produite par le ressort 70 à cet instant, le piston de contrôle 26 et le tiroir 34 commencent un mouvement de retour et la soupape selon l'invention reprend progressivement son état de position fermée, crochets 67 engagés sur la rampe 69.

**0 278 810**

Du fait que la surpression ainsi compensée par la soupape est la conséquence d'un accident malencontreux, l'opérateur décidera alors d'arrêter le système d'injection de fluide abrasif (boue ou ciment par exemple) et de procéder immédiatement à la suppression de la cause de cet accident. A cette occasion, il vidangera la chambre centrale 16 de la boue ou du ciment qu'elle contient en faisant circuler de l'huile propre à travers les orifices 78 et 80 préalablement débouchés. Puis il fermera à nouveau ces orifices. La soupape de sécurité selon l'invention est alors prête pour un nouveau service.

L'invention n'est, bien entendu, pas limitée à la forme de réalisation décrite et peut faire l'objet de diverses variantes.

L'une de ces variantes est illustrée à la figure 3. Elle consiste à remplacer le piston de référence 58, le ressort 70 et les lames élastiques 66, par un accumulateur hydraulique à pression variable. Un tel accumulateur est connu de l'homme du métier et comporte une chambre de référence 20 remplie d'huile, la pression dans cette chambre 20 étant produite par un piston 82 dont l'autre face est soumise à une pression pneumatique réglable (chambre auxiliaire 100). Le fonctionnement de cette soupape ainsi modifiée est semblable à celui de la soupape de la figure 1. Elle a l'avantage d'offrir la possibilité de vérifier et de régler sa pression d'ouverture et l'inconvénient d'une vitesse d'ouverture quelque peu réduite.

On notera par ailleurs qu'il est aisé selon la figure 4 de transformer la soupape de sécurité selon l'invention en une vanne de contrôle sans réaction. Pour ce faire, la chambre de référence 20 est, par le passage axial 100, le passage transversal 102 et la rainure 104 en communication directe avec le fluide dont il faut contrôler la pression. Au moyen d'une tige de commande (106) passant au travers du fond de la chambre de référence 20, il est aisé de déplacer le piston de contrôle 26 de manière à obtenir, sans à coup et sans dommage, une ouverture plus ou moins importante de la vanne ainsi réalisée, quelles que soient la valeur de la pression du fluide concerné et la quantité de particules abrasives transportées. En effet, selon la position relative de l'extrêmité 28 du piston de contrôle 26 et du bord de la chambre sous contrôle 18, une chute de pression ajustable est créée, de telle sorte que la pression dans la chambre 18 peut être ajustée à volonté.

## Revendications

1. Soupape de sécurité du genre comprenant d'une part, un corps creux (10) fermé par un bouchon (12) délimitant un volume de révolution formé d'une chambre centrale (16) relativement large et de deux chambres opposées (18 et 20) relativement étroites et, d'autre part, un piston flottant (26) ayant ses extrémités (28 et 30) engagées dans lesdites chambres opposées, une face de ce piston étant soumise à une poussée de référence et l'autre à la pression du fluide à contrôler, la chambre centrale (16) comportant un trou de décharge (24), caractérisée en ce que, les chambres opposées (18 et 20) ayant des diamètres identiques, et le trou de décharge (24) étant muni de joints d'étanchéité (40-42), le piston flottant (26) comporte dans sa partie médiane, un tiroir cylindrique (34) formé d'un fond (36) et d'une paroi (38) adaptée à coulisser dans la chambre centrale (16), au moins un trou longitudinal (44) étant percé dans ce fond (34) et au moins un trou radial (48) percé dans cette paroi (38), et en ce que, en position fermée, la paroi du tiroir (34) obture d'une manière étanche le trou de décharge (24) et l'extrémité (28) du piston flottant (26) obture d'une manière non étanche la chambre sous contrôle (18) et, en position ouverte, ladite extrémité (28) du piston (26) est dégagée de la chambre sous contrôle (18) et le trou radial (48) du tiroir (34) est disposé en face du trou de décharge (24).

2. Soupape de sécurité selon la revendication 1, caractérisé en ce que la paroi (38) du tiroir (34) comporte des canaux étroits (52), raccordés au trou radial (48), lesdits canaux étant adaptés à glisser sans dommage sur un joint d'étanchéité (40) associé au trou de décharge (24), pendant la première partie du mouvement d'ouverture de la soupape.

3. Soupape de sécurité selon la revendication 2 caractérisé en ce que la section de passage totale desdits canaux étroits (52) est très supérieure à la section de passage totale comprise entre l'extrémité (28) du piston (26) engagée dans la chambre de contrôle (18) et la paroi interne de cette même chambre.

4. Soupape de sécurité selon la revendication 1 caractérisé en ce que au moins un téton (54) monté fixe dans un fond de la chambre centrale (16) est adapté à progressivement obturer le trou longitudinal (44) percé dans le fond du tiroir (34) dès que ledit trou radial (48) est nettement disposé en face du trou de décharge (24).

5. Soupape de sécurité selon la revendication 1 caractérisé en ce que la poussée de référence appliquée à l'extrémité (30) du piston de contrôle (26) est engendrée par un ressort (70) et par des crochets (67) à force de déverrouillage tarée, montés en appui sur l'épaulement (60) d'un piston de référence (58) engagé dans ladite chambre de référence (20).

6. Soupape de sécurité selon les revendications 1 à 4, caractérisé en ce que la poussée de référence appliquée à l'extrémité (30) du piston de contrôle (26) est engendrée par un accumulateur hydraulique comportant une chambre référence (20) remplie d'huile, un piston de séparation (82) et une chambre auxiliaire (100) remplie d'un gaz à pression réglable.

7. Soupape de sécurité selon les revendications 1 à 6 caractérisée en ce que la chambre centrale (16) comporte un trou de remplissage (78) et un trou de vidange (80) destinés à permettre le remplissage de ladite chambre centrale (16) par un fluide propre.

**8.** Vanne de réglage de pression comprenant une soupape selon les revendications 1 à 4, caractérisée en ce que la chambre de référence (20) est en communication avec la chambre de contrôle (18) et en ce que l'extrémité (30) du piston de contrôle (26) est reliée à une tige de commande (106) traversant le fond de ladite chambre de référence (20).

FIG.1A          FIG.1B

0278810

0278810

FIG. 2

0278810

FIG. 3    FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 202 248  (V.E.B.)<br>* Page 3, lignes 9-22 *<br>--- | 1 | F 16 K  17/02<br>F 16 K  17/04 |
| A | EP-A-0 005 101  (REGNIER)<br>* Page 5, ligne 31 - page 6, ligne 4 *<br>--- | 1,6 | |
| A | GB-A-2 046 407  (WEIRICH)<br>* Figure 4 *<br>----- | 1 | |

**DOMAINES TECHNIQUES RECHERCHES (Int. Cl.4)**

F 16 K

Le présent rapport a été établi pour toutes les revendications

| Lieu de la recherche | Date d'achèvement de la recherche | Examinateur |
|---|---|---|
| LA HAYE | 22-04-1988 | VERELST P.E.J. |

EPO FORM 1503 03.82 (P0402)